(19) **Europäisches Patentamt / European Patent Office / Office européen des brevets**

(11) **EP 0 885 543 B1**

(12) # EUROPEAN PATENT SPECIFICATION

(45) Date of publication and mention
of the grant of the patent:
**12.12.2007 Bulletin 2007/50**

(51) Int Cl.:
**H04Q 7/38** *(2006.01)*　　**G01S 5/14** *(2006.01)*

(21) Application number: **97915495.2**

(22) Date of filing: **02.04.1997**

(86) International application number:
**PCT/FI1997/000202**

(87) International publication number:
**WO 1997/038548 (16.10.1997 Gazette 1997/44)**

(54) **LOCATION METHOD AND SYSTEM**

VERFAHREN UND STANDORTERFASSUNGSSYSTEM

PROCEDE ET SYSTEME DE LOCALISATION

(84) Designated Contracting States:
**AT BE CH DE DK ES FI FR GB GR IE IT LI LU MC NL PT SE**
Designated Extension States:
**LT LV**

(30) Priority: **04.04.1996 FI 961515**
**05.12.1996 FI 964869**

(43) Date of publication of application:
**23.12.1998 Bulletin 1998/52**

(73) Proprietor: **TeliaSonera Finland Oyj**
**00510 Helsinki (FI)**

(72) Inventors:
• **KESKI-HEIKKILÄ, Mika**
**FIN-02150 Espoo (FI)**
• **LINKOLA, Janne**
**FIN-00170 Helsinki (FI)**

(74) Representative: **Simmelvuo, Markku Kalevi et al**
**Papula Oy**
**P.O. Box 981**
**00101 Helsinki (FI)**

(56) References cited:
EP-A- 0 320 913　　WO-A-92/05672
DE-A- 4 409 178　　GB-A- 2 239 758
GB-A- 2 280 327　　US-A- 5 293 645
US-A- 5 325 432

**Description**

The present invention relates to a location method defined in the introductory part of claim 1 and a location system defined in the introductory part of claim 10.

Numerous location methods and location devices are known before. One commonly used system is the GPS-system (GPS, Global Positioning System). The GPS-system comprises a World-wide navigation and location system based on the determination of time and distance and including 24 satellites orbiting the globe. The satellites orbit the earth at the height of 20200km at six track levels and their orbit time is about 11 hours. Each GPS-satellite sends radio signals at the frequency of 1575,42 and 1227,6 MHz. To both carrier waves are added the modulated updated information concerning the satellite's track and the necessary time signs. Coordinate data of the satellites will not be sent. A location device compatible with the system carries out the positioning so that the information sent by the satellites is received and the location of the device is determined based on this information. The problem is that a special location device is needed in the location operation, which consumes also much power. Besides the initial outlay of the device is significant, at least concerning the private user. A further problem in the GPS-system is that there must be a direct visual contact for the location device to at least three satellites, when the location cannot be made in internal spaces.

A location system has been realized to substitute the GPS-system to function also in the mobile station network. In that case the location takes place in a separate component placed in the mobile station network.

Such solutions are described for instance in the publications WO 9205672, GB 2239758, EP 0 320 913 and GB 2280327. In one embodiment the location is effected so, that the cellular phone selects three strongest base stations, takes in turn a contact to them and determines the distance between the cellular phone and the base stations. Thereafter the mobile station sends e.g. distance information ($d_1$, $d_2$, $d_3$) and the base stations and its own identities to the location unit in the network, which unit determines the location by a circle method or a hyperbolic method. These methods are well-known coordinate calculation methods. Thus the location is at the disposal of the network and it can be sent back to the cellular phone. The location unit can also exist in the cellular phone, but in this case location information concerning all the base stations in the network must be recorded to the location unit in the cellular phone. This is not, however, practical, because the operator is not willing to give this information to the public, and because the network is alive all the time, the information is not either updated.

One of the disadvantages of the before-known solutions is that the location information is not directly at the disposal of cellular phones, but the network must send it to the cellular phone using for instance a short message. One drawback is also that the one location calculation request causes a dispatching need of many short messages, which is not very sensible, if many devices desire continuous location information in the same region. None of the prior art publications WO 9205672, GB 2239758, EP 0 320 913 and GB 2280327 discloses the possibility of encrypting the location information of the transmitters associated with the base stations and thereby allowing a terminal device to compute the location without disclosing to the public the information on the locations of the transmitters.

The object of the present invention is to solve the above-mentioned problems. The object of the present invention is particularly to set forth a location method that can be realized also in the mobile station network and that does not load the mobile station network capacity excessively. A further object of the present invention is to present a user-friendly location device that can easily be combined with the existing mobile station.

For the characterizing part of the present invention reference is made to the claims.

In the method according to the invention to determine a location in a predetermined coordinate system, as a chart coordinate system, information signals are sent by the transmitter concerning the transmitter data and a terminal device receives these information signals. In compliance with the invention with these information signals are combined location data of the transmitter, such as accurate coordinate information in the coordination system. Further on in the terminal it is determined the distance of the terminal device for instance based on the signal received from the transmitter. Coordinates of the terminal device are calculated based on the received location information of the transmitter and the distance of the terminal device from the transmitter. Characteristic to the method of the invention is that the location codes combined with the information signals are encrypted using a predetermined encryption method and that with the information signals sent by the transmitter are combined the location information of the surrounding transmitters.

The terminal device preferably receives information signals from at least three or more transmitters.

In one advantageous embodiment of the invention mobile station network can be utilized in the location operation, whereat the transmitter serves as a base station and the terminal device as a mobile station, with which have been combined the qualities needed in the location operation.

An advantage of the present invention compared with the prior art is that the location determination does not require dispatching of numerous messages from the mobile station network (e.g. short messages from the GSM-system). Also the information needed for the location determination is at the disposal of all mobile stations simultaneously, or if desired the acquirement of the location information can be limited to only the persons, who have the encryption key. One advantage of the invention is also that the location can be determined continuously; the location determination in the network according to the prior art functions only if requested and there is always delay in the transmission of the location information.

The location codes connected to the information signals are encrypted using a predetermined encryption method. A preferable encryption method can be altered after certain intervals in order to improve the encryption. The advantage of the encryption is that if desired the mobile station operator may limit the use of the location method and sell the right of use to persons wanting it.

When the mobile station network is used, situations may occur, in which the distance of the terminal device from the base station is below a certain threshold value that can consist of e.g. the desired location accuracy or generally the greatest location accuracy, for example about 500 m, so the location of the transmitter is determined as that of the terminal device. Then the location takes place very quickly, because no calculation is needed. On the other hand the mobile station can be in the region, where the distance of the base stations from each other is below the predetermined threshold value, for instance in densely populated area in so-called picocell environment. Also here the location of the mobile station is determined the location, that the transmitter, to which the terminal device is in contact, has informed.

The mobile station system is preferably based on the digital technique, as the GSM-technique, DCS 1800-technique or similar. Advantageously a general transmission channel or other channel suitable for this purpose is used for the signal dispatching.

The location system in a predetermined coordination system according to the invention includes a transmitter, by which information signals about the transmitter data will be sent, and a terminal device, by which information signals will be received. According to the invention the system includes also an adding device that is arranged to connect the transmitter's location data to the information signals in the coordination system. Further on according to the invention, the terminal device includes means for the determination of the distance between the terminal device and the transmitter and for determination of the location of the terminal device based on the received location information and the distance of the terminal device from the transmitter. Characteristic to the system of the invention is that the system includes encryption means for encrypting the location information combined with information signals using a predetermined encryption method and in that the transmitter is arranged to combine with the information signals the location information of the transmitters surrounding the transmitter.

The adding device may as such belong to the mobile station network or it can comprise a component outside the network being connected to the mobile station network. The terminal device can also include a subscriber's identification unit, as a SIM-card (SIM, Subscriber Identity Module), with which have been combined the qualities needed for the determination of the distance and the place.

In one embodiment the system is based on the mobile station network, whereby the transmitter serves as the base station of the mobile station network and the terminal device serves as the mobile station. The system preferably includes at least two transmitters. The system can also include encryption means in order to encrypt the location information combined with the information signals using a predetermined encryption method. The encryption means may belong for instance to the adding device or they can also be located to any other suitable network element in the mobile station network or outside it.

In one solution according to the invention each base station sends individual information needed for the location data, as the coordinates of the base station in question and of the adjoining cells as wells as time and distance information, in the signaling and transmission channel of the mobile service system. In the present GSM-system cam be used each base station's own CBCH-channel (CBCH, Cell Broadcast Channel), which all the mobile stations connected to the base station can listen. In the future Phase 2+ GSM it is possible to use a packet data network, for example Packet Radio GPRS. The location information sent in the signaling or transmission channel can be encrypted by some encryption algorithm, the encryption key of this algorithm can also be sold e.g. for a certain time period or the encryption key can also be sold by license directly to the equipment manufacturer. After receiving the encryption key, the mobile station may discharge the received coordinate data. Because of mathematical requirements the mobile station needs at least three base stations to calculate the location information for instance by the circle method or the hyperbolic method.

The invention will be described in the following by the accompanying exemplary embodiment with reference to the enclosed drawing, in which:

Figure 1 shows a system according to the invention; and
Figure 2 shows the use of the circle method in one embodiment of the invention.

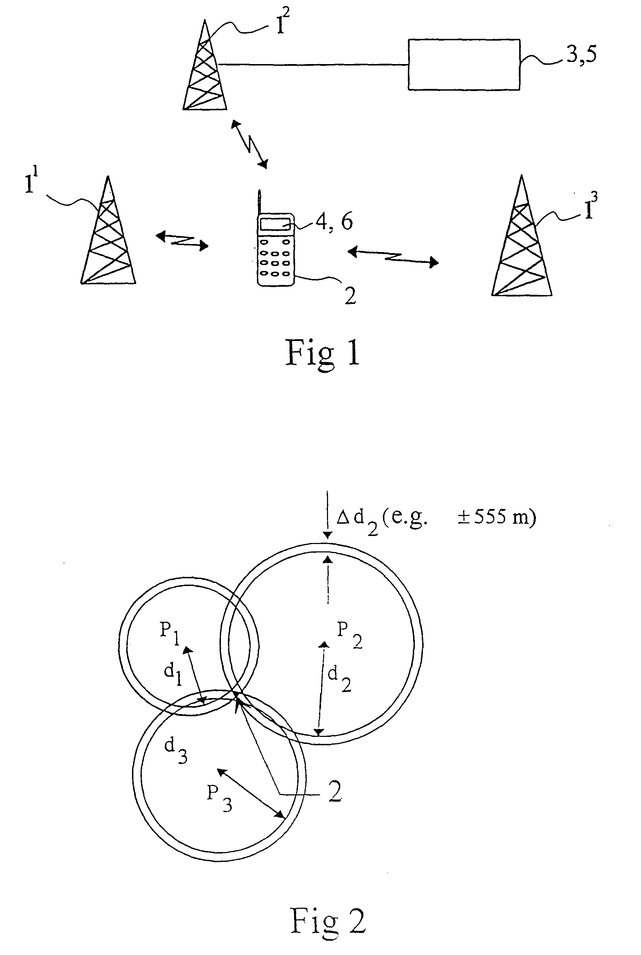

The mobile station system, based in this example on the GSM-technique, includes three base stations $1^1$, $1^2$ and $1^3$. Each base station sends for instance in the CBCH-channel its own location information and also that of the surrounding base stations. It is preferable to limit the amount of surrounding base stations for example by a certain distance value. To each base station have also been connected an adding device 3 and encryption means 5 (in this example connection is made in an exemplary way only to the base station $1^2$), by which it is possible to add location information to the information signal and encrypt them by certain suitable encryption algorithm. Adding and encryption means can be controlled centrally for instance from the mobile station exchange or outside the network. Fig. 1 shows also the mobile station 2 being an integral part of the mobile station system. There can be almost an unlimited number of mobile stations in the system. To the mobile station have also be connected determination means 4, by which the distance to each base station is defined and the location of the mobile station is calculated on the grounds of the distance and location information received from base stations $1^1$, $1^2$ and $1^3$. To the mobile station 2 has additionally been connected the subscriber's identification unit, SIM-card 6. Also to the SIM-card can be connected the determination means 4.

In the example according to Fig. 1 the system includes an adding and encryption device 3, 5, belonging to the GSM-network. The device 3, 5 has means, by which it can communicate with the GSM- terminal devices through base stations 1. The device 3, 5 comprises in the GSM-network the Cell Broadcast Entity (CBE) communicating with the Cell Broadcast Center (CBC), which in turn transmits messages to the base station controller BSC (BSC, Base Station Controller), which then furthers the messages to the base station. The device 3, 5 can also be directly connected to the base station controller, whereby it is in the position corresponding CBC. The location information of the base stations is found advantageously for the adding device 3 from the cellular design system of the operator or the network management system OMC (OMC, Operating and Maintenance Center).

In the following it is presented referring to Fig. 1 one example of the function of the location system in the mobile station network. The mobile station 2 takes for instance in the intensity order contact to base stations $1^1$, $1^2$ and $1^3$, gets coordinates from them and preferably also the distance information. (Distance information in the GSM-system could be e.g. Timing Advance (TA) in the BCCH-channel). Having received this information from at least three base stations, the mobile station can in the grounds of this information calculate its own location.

On the other hand the mobile station 2 may get the coordinates of the mobile stations also by one contact, if all the base stations $1^1$, $1^2$ and $1^3$ send in addition to their own location information also that of the surrounding base stations. This kind of a procedure makes the location determination remarkably swifter. For the determination of the distance information is then used the field intensity or other suitable information available from the base station without making contact to it. However, if the terminal device would find out by the first contact also the location information of the adjoining cells, the contact-making to other base stations could be significantly quicker, because for instance there would not be any need to wait for the coordination information sent in the Cell Broadcast -channel between certain time periods (1/30 s), during each contact.

In the following it is presented with reference to Fig. 2, one calculation method according to the invention to calculate the location coordinates of the mobile station. The location codes $(x_o, y_o)$ can be defined for instance by the already before known circle method from the equation (1), when the coordinates $P_1 = (a_1, b_1)$; $P_2 = (a_2, b_2)$, $P_3 = (a_3, b_3)$ and the distances $d_1$, $d_2$, $d_3$ are known from Fig. 2. The location coordinates $P_1$, $P_2$ and $P_3$ are received from each base stations by forming a connection to them. Correspondingly the distances $d_1$, $d_2$ and $d_3$ are determined in the mobile station from the strength of the received signal.

$$(x_0 - a_1)^2 + (y_0 - b_1)^2 = d_1{}^2$$
$$(x_0 - a_2)^2 + (y_0 - b_2)^2 = d_2{}^2 \qquad (1)$$
$$(x_0 - a_3)^2 + (y_0 - b_3)^2 = d_3{}^2$$

Correspondingly in the GPS the distances are found by calculating the running time delay from the satellite to the receiver from the accurate time based on the atom clock. It is not appropriate in the mobile station system to transmit absolute time to the mobile station, but instead the location can be calculated by relative time differences. In this case four base stations are needed instead of three base stations to get the location in a two-dimensional space.

The accuracy of the location determination is limited by the accuracy of the distance measurement. For instance in the GSM-system the measuring accuracy of TA (Timing Advance) is +555 m, shown in Fig. 2 by the marking $\Delta d_2$. The coordinate information can instead be very accurate, if needed. The accuracy of the location determination increases, when there are more than three base stations in the use. For the distance calculation can be used also a "real" running time delay before the information is quantified to some value of TA. It is also possible to use the OTD-value (Observed Time Difference) needed in the synchronized channel exchange, but also then four base stations are needed, but a bit more accurate location determination may be obtained. It would also be possible to use as the GSM-system the dispatch of the coordinates of the base stations and accurate time information to the terminal device.

In city environment, where micro-, pico- or even nano-cells are used, the cell radius can be only a few dozen meters. In this case the distance information or similar between the mobile station 2 and the base station 1 is not necessarily needed at all, because only the coordination information of the base station would be sufficient for most embodiments. For example a location algorithm could upon the location determination observe, that it is located at the moment in a picocell environment, if in its reception area there are n pieces of mobile stations, whose TA is small enough. Then it could determine its location by the coordinates of only one serving base station.

As a summary from the above-mentioned can still be stated as follows. One common practical embodiment of the invention could comprise a location device utilizing the location information, distance information, time data and other identification information of the mobile stations or only some of these obtained from the signaling channel of the cellular phone network. Another embodiment for the location device could comprise a location device integrated to the cellular phone, having a digital map from its location area at its disposal. The user could monitor his location using the map in the display of the cellular phone in real time. The device could also be realized using already existing technologies by connecting to the cellular phone a portable computer, whereby a suitable map program in the display of the computer could determine the location. The telephone could also only show its own location coordinates in the cellular phone display.

The invention is not restricted only to the embodiments explained above, but many modifications are possible within the inventive concept defined by the claims.

**Claims**

1. A method for determining a location of a terminal device in a predetermined coordinate system, in which method information signals are transmitted by a transmitter concerning the transmitter data and these information signals are received by the terminal device, with the information signals are combined the location information of the transmitter in the coordinate system and/or the identification data, the distance of the terminal device from the transmitter is defined and the location of the terminal device is calculated based on the received location information of the transmitter and on the distance of the terminal device from the transmitter, **characterized in that** the location codes combined with the information signals are encrypted using a predetermined encryption method and that with the information signals sent by the transmitter are combined the location information of the surrounding transmitters.

2. A method according to claim 1, **characterized in that** a changing of the encryption method is used after time periods.

3. A method according to claim 1 or 2, **characterized in that** the mobile station is based on the digital technique and that information signals are transmitted in a common transmission channel.

4. A method according to any of the preceding claims 1 - 3, **characterized in that** the location operation is effected in an identification unit of the subscriber in association with the mobile station, as in a SIM-card.

5. A method according to any of the preceding claims 1 - 4, **characterized in that** a mobile station network is used in the location operation; and that the transmitter is a base station and the terminal device is a mobile station.

6. A method according to any of the preceding claims 1 - 5, **characterized in that** at least three transmitters are used.

7. A method according to any of the preceding claims 1 - 6, **characterized in that** when the distance of the terminal device from the transmitter is below a predetermined threshold value, the location of the terminal device is defined as that of the transmitter.

8. A method according to any of the preceding claims 1 - 7, **characterized in that** when the terminal device observes that it is located in the region, where the distance of the transmitters from each other is below a predetermined threshold value, the location of the terminal device is defined as the location informed by the transmitter, to which the terminal device is in contact.

9. A system for determining a location of a terminal device (2) in a predetermined coordinate system, which system comprises a transmitter (1), by which information signals are transmitted concerning the transmitter data; the terminal device (2), by which these information signals are received, the terminal device (2) comprising means (4) for determining the distance between the terminal device (2) and the transmitter (1) and for determining the location of the terminal device based on the received location information of the transmitter (1) and the distance of the terminal device (2) from the transmitter; and an adding device (3) arranged to combine with the information signals the location information of the transmitter in a coordinate system; **characterized in that** the system includes encryption means (5) for encrypting the location information combined with information signals using a predetermined encryption method and **in that** said transmitter (1) is arranged to combine with the information signals the location information of the transmitters ($1^1$, ..., $1^n$) surrounding the transmitter (1).

10. A system according to claim 9, **characterized in that** the encryption method used in said encryption means has been arranged to change during time periods.

**11.** A system according to claim 9 or 10, **characterized in that** the mobile station system is based on the digital technique and that information signals are transmitted in the common transmission channel.

**12.** A system according to any of the preceding claims 9 - 11, **characterized in that** the system is based on the mobile station network; and that the transmitter (1) is the base station of the mobile station network and the terminal device (2) is the mobile station.

**13.** A system according to any of the preceding claims 9 - 12, **characterized in that** the system includes at least three transmitters ($1^1$, ..., $1^n$).

**14.** A system according to any of the preceding claims 9 - 13, **characterized in that** the system includes a subscriber's identification unit (6) combined with the mobile station (2) and having means (4) for the determination of the distance between the base station (1) and the mobile station as well as the location of the mobile station.

**Patentansprüche**

**1.** Verfahren zum Bestimmen eines Standorts einer Endgeräteeinrichtung in einem vorher festgelegten Koordinatensystem, wobei in dem Verfahren Informationssignale, welche die Senderdaten betreffen, durch einen Sender übertragen werden und wobei diese Informationssignale durch die Endgeräteeinrichtung empfangen werden, mit den Informationssignalen die Standortinformation des Senders in dem Koordinatensystem und/oder den Identifikationsdaten kombiniert werden, der Abstand der Endgeräteeinrichtung von dem Sender definiert wird und der Standort der Endgeräteeinrichtung basierend auf der empfangenen Standortinformation des Senders und auf dem Abstand der Endgeräteeinrichtung von dem Sender berechnet wird, **dadurch gekennzeichnet, dass** die Standortcodes, welche mit den Informationssignalen kombiniert sind, verschlüsselt werden, wobei ein vorher festgelegtes Verschlüsselungsverfahren benutzt wird, und **dadurch**, dass mit den Informationssignalen, welche durch den Sender gesendet werden, die Standortinformation der umgebenden Sender kombiniert wird.

**2.** Verfahren nach Anspruch 1, **dadurch gekennzeichnet, dass** ein Verändern des Verschlüsselungsverfahrens nach Zeitintervallen genutzt wird.

**3.** Verfahren nach Anspruch 1 oder 2, **dadurch gekennzeichnet, dass** das Mobiltelefon auf Digitaltechnik basiert und dass die Informationssignale in einem gewöhnlichen Übertragungskanal gesendet werden.

**4.** Verfahren nach einem der vorausgehenden Ansprüche 1-3, **dadurch gekennzeichnet, dass** der Standortbetrieb in einer Identifikationseinheit des Teilnehmers zusammen mit dem Mobiltelefon bewirkt wird, wie in einer SIM-Karte.

**5.** Verfahren nach einem der vorausgehenden Ansprüche 1-4, **dadurch gekennzeichnet, dass** ein Mobiltelefonnetz bei dem Standortbetrieb genutzt wird; und dass der Sender eine Basisstation und die Endgeräteeinrichtung ein Mobiltelefon ist.

**6.** Verfahren nach einem der vorausgehenden Ansprüche 1-5, **dadurch gekennzeichnet, dass** wenigstens drei Sender genutzt werden.

**7.** Verfahren nach einem der vorausgehenden Ansprüche 1-6, **dadurch gekennzeichnet, dass**, wenn der Abstand der Endgeräteeinrichtung von dem Sender unterhalb eines vorher festgelegten Schwellwertes ist, der Standort der Endgeräteeinrichtung als der des Senders definiert wird.

**8.** Verfahren nach einem der vorausgehenden Ansprüche 1-7, **dadurch gekennzeichnet, dass**, wenn die Endgeräteeinrichtung beobachtet, dass sie in dem Bereich bzw. in der Region platziert ist, wo der Abstand der Sender voneinander niedriger als ein vorher festgelegter Schwellwert ist, der Standort der Endgeräteeinrichtung als der Standort definiert wird, welcher durch den Sender berichtet wurde, mit welchem die Endgeräteeinrichtung in Kontakt ist.

**9.** System zum Bestimmen eines Standorts einer Endgeräteeinrichtung (2) in einem vorher festgelegten Koordinatensystem, wobei das System aufweist: einen Sender (1), über welchen Informationssignale, welche die Senderdaten betreffen, übertragen werden; die Endgeräteeinrichtung (2), über welche diese Informationssignale empfangen werden, wobei die Endgeräteeinrichtung (2) eine Vorrichtung (4) aufweist, um den Abstand zwischen der Endgeräteeinrichtung (2) und dem Sender (1) zu bestimmen und um den Standort der Endgeräteeinrichtung, basierend auf der empfangenen Standortinformation des Senders (1) und dem Abstand der Endgeräteeinrichtung (2) von dem Sender, zu bestimmen; und eine Addiereinrichtung (3), welche angeordnet ist, um mit den Informationssignalen die Standortinformation des Senders in einem Koordinatensystem zu kombinieren; **dadurch gekennzeichnet, dass** das System eine Verschlüsselungseinrichtung (5) beinhaltet, um die Standortinformation, welche mit Informationssignalen kombiniert ist, zu verschlüsseln, wobei ein vorher festgelegtes Verschlüsselungsverfahren benutzt wird, und **dadurch**, dass der Sender (1) angeordnet ist, um mit den Informationssignalen die Standortinformation der Sender ($1^1$, ..., $1^n$), welche den Sender (1) umgeben, zu kombinieren.

10. System nach Anspruch 9, **dadurch gekennzeichnet, dass** das benutzte Verschlüsselungsverfahren in der Verschlüsselungseinrichtung angeordnet wurde, um sich während Zeitintervallen zu ändern.

11. System nach Anspruch 9 oder 10, **dadurch gekennzeichnet, dass** das Mobiltelefonsystem auf Digitaltechnik basiert und dass die Informationssignale in einem gewöhnlichen Übertragungskanal übertragen werden.

12. System nach einem der vorausgehenden Ansprüche 9-11, **dadurch gekennzeichnet, dass** das System auf dem Mobiltelefonnetz basiert; und dass der Sender (1) die Basisstation des Mobiltelefonnetzes ist und dass die Endgeräteeinrichtung (2) das Mobiltelefon ist.

13. System nach einem der vorausgehenden Ansprüche 9-12, **dadurch gekennzeichnet, dass** das System wenigstens drei Sender ($1^1$, ..., $1^n$) beinhaltet.

14. System nach einem der vorausgehenden Ansprüche 9-13, **dadurch gekennzeichnet, dass** das System eine Identifikationseinheit (6) eines Teilnehmers beinhaltet, welche mit dem Mobiltelefon (2) kombiniert ist und welches eine Einrichtung (4) besitzt, um die Bestimmung des Abstandes zwischen der Basisstation (1) und der Mobilstation ebenso wie den Standort des Mobiltelefons zu bestimmen.

**Revendications**

1. Procédé pour déterminer un emplacement d'un dispositif terminal dans un système de coordonnées prédéterminé, procédé dans lequel des signaux d'information sont transmis par un émetteur concernant les données d'émetteur et ces signaux d'information sont reçus par le dispositif terminal, avec les signaux d'information sont combinées les informations d'emplacement de l'émetteur dans le système de coordonnées et/ou les données d'identification, la distance du dispositif terminal par rapport à l'émetteur est définie et l'emplacement du dispositif terminal est calculé sur la base des informations d'emplacement reçues de l'émetteur et de la distance du dispositif terminal par rapport à l'émetteur, **caractérisé en ce que** les codes d'emplacement combinés avec les signaux d'information sont chiffrés en utilisant un procédé de chiffrement prédéterminé et qu'avec les signaux d'information envoyés par l'émetteur sont combinées les informations d'emplacement des émetteurs environnants.

2. Procédé selon la revendication 1, **caractérisé en ce qu'**un changement du procédé de chiffrement est utilisé avec des périodes de temps.

3. Procédé selon la revendication 1 ou 2, **caractérisé en ce que** la station mobile est basée sur la technique numérique et que les signaux d'information sont transmis dans un canal de transmission commun.

4. Procédé selon l'une quelconque des revendications précédentes 1 à 3, **caractérisé en ce que** l'opération de localisation est effectuée dans une unité d'identification de l'abonné en association avec la station mobile, comme dans une carte SIM.

5. Procédé selon l'une quelconque des revendications précédentes 1 à 4, **caractérisé en ce qu'**un réseau de stations mobiles est utilisé dans l'opération de localisation ; et que l'émetteur est une station de base et le dispositif terminal est une station mobile.

6. Procédé selon l'une quelconque des revendications précédentes 1 à 5, **caractérisé en ce qu'**au moins trois émetteurs sont utilisés.

7. Procédé selon l'une quelconque des revendications précédentes 1 à 6, **caractérisé en ce que** lorsque la distance du dispositif terminal par rapport à l'émetteur est inférieure à une valeur de seuil prédéterminée, l'emplacement du dispositif terminal est défini comme étant celui de l'émetteur.

8. Procédé selon l'une quelconque des revendications précédentes 1 à 7, **caractérisé en ce que** lorsque le dispositif terminal observe qu'il est localisé dans la région, où la distance des émetteurs les uns par rapport aux autres est inférieure à une valeur de seuil prédéterminée, l'emplacement du dispositif terminal est défini comme étant l'emplacement indiqué par l'émetteur, avec lequel le dispositif terminal est en contact.

9. Système pour déterminer un emplacement d'un dispositif terminal (2) dans un système de coordonnées prédéterminé, lequel système comprenant un émetteur (1), par lequel des signaux d'information sont émis concernant les données d'émetteur ; le dispositif terminal (2), par lequel ces signaux d'information sont reçus, le dispositif terminal (2) comprenant des moyens (4) pour déterminer la distance entre le dispositif terminal (2) et l'émetteur (1) et pour déterminer l'emplacement du dispositif terminal sur la base des informations d'emplacement reçues de l'émetteur (1) et la distance du dispositif terminal (2) par rapport à l'émetteur ; et un dispositif de sommation (3) configuré pour combiner avec les signaux d'information les informations d'emplacement de l'émetteur dans un système de coordonnées ; **caractérisé en ce que** le système comprend des moyens de chiffrement (5) pour chiffrer les informations d'emplacement combinées avec des signaux d'information en utilisant un procédé de chiffrement prédéterminé et **en ce que** ledit émetteur (1) est agencé pour combiner avec les signaux d'information les informations d'emplacement des émetteurs ($1^1$, ..., $1^n$) entourant l'émetteur (1).

10. Système selon la revendication 9, **caractérisé en ce que** le procédé de chiffrement utilisé dans lesdits moyens de chiffrement a été configuré pour changer durant des périodes de temps.

11. Système selon la revendication 9 ou 10, **caractérisé en ce que** le système de station mobile est basé sur la technique numérique et que des signaux d'information sont transmis dans le canal de transmission commun.

12. Système selon l'une quelconque des revendications précédentes 9 à 11, **caractérisé en ce que** le système est basé sur le réseau de stations mobiles ; et que l'émetteur (1) est la station de base du réseau de stations mobiles et le dispositif terminal (2) est la station mobile.

13. Système selon l'une quelconque des revendications précédentes 9 à 12, **caractérisé en ce que** le système comprend au moins trois émetteurs ($1^1$, ..., $1^n$).

14. Système selon l'une quelconque des revendications précédentes 9 à 13, **caractérisé en ce que** le système comprend une unité d'identification d'abonné (6) combinée avec la station mobile (2) et ayant des moyens (4) pour la détermination de la distance entre la station de base (1) et la station mobile ainsi que l'emplacement de la station mobile.

Fig 1

$\Delta d_2$ (e.g. $\pm 555$ m)

$P_1$

$d_1$

$P_2$

$d_2$

$d_3$

$P_3$

2

Fig 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9205672 A
- GB 2239758 A
- EP 0320913 A
- GB 2280327 A